Europäisches Patentamt

European Patent Office

Office européen des brevets

(11) Numéro de publication: **0 052 079**
**B1**

(12) **FASCICULE DE BREVET EUROPEEN**

(45) Date de publication du fascicule du brevet:
05.02.86

(21) Numéro de dépôt: 81810447.3

(22) Date de dépôt: 10.11.81

(51) Int. Cl.⁴: **H 05 B 3/34, F 24 D 13/02**

(54) Procédé de fabrication d'un corps de chauffe.

(30) Priorité: 12.11.80 CH 8385/80
30.04.81 EP 81810164

(43) Date de publication de la demande:
19.05.82 Bulletin 82/20

(45) Mention de la délivrance du brevet:
05.02.86 Bulletin 86/6

(84) Etats contractants désignés:
AT BE CH DE FR GB IT LI NL SE

(56) Documents cités:
EP - A - 0 004 829
AT - A - 354 579
BE - A - 634 716
CH - A - 421 330
GB - A - 1 192 927
US - A - 3 214 565
US - A - 3 413 613
US - A - 3 810 304

(73) Titulaire: **BATTELLE MEMORIAL INSTITUTE, 7 route de Drize, CH-1227 Carouge/Genève (CH)**

(72) Inventeur: **Courvoisier, Guy, 38, Grand-Pré, CH-1202 Geneve (CH)**
Inventeur: **Arieh, Simon, 24, Av. de la Gare des Eaux-Vives, CH-1208 Geneve (CH)**

(74) Mandataire: **Dousse, Blasco et al, 7, route de Drize, CH-1227 Carouge/Genève (CH)**

LIBER, STOCKHOLM 1986

## Description

La présente invention se rapporte à un procédé de fabrication d'un corps de chauffe électrique selon lequel on fixé une feiulle métallique sur un support isolant et flexible, on découpe des fentes parallèles partant alternativement de deux bords opposes de cette feuille et s'arrêtant à distance du bord opposé à celui d'où elles partent pour former un conducteur résistif sur toute la surfac de cette feuille, et on écarte pendant le découpage au moins un des bords de cas fontes en le déformant par rapport au plan de la feuille.

Il a déjà été proposé dans les brevets AT 354 579, GB 1 192 927 et US 3 214 565 notamment, de former un corps de chauffe à partir d'une feuille métallique, en ménageant un conducteur de section sensiblement constante grâce à des fentes parallèles partant alternativement de deux bords opposés de cette feuille et s'arrêtant à une certaine distance du bord opposé à celui d'où elles partent pour répartir sensiblement uniformément le courant de chauffage sur toute la surface de la feuille métallique. Ces fentes sont obtenues par une opération d'usinage au cours de laquelle la matière de la feuille métallique est enlevée sur une certaine largeur par fraisage ou sciage notamment, de manière à garantir la répartition de courant désirée.

La fabrication d'un tel corps de chauffe suppose, notamment si la feuille métallique est mince, que cette feuille soit initialement fixée sur un support avant que les fentes soient découpées par fraisage ou sciage. Le principal inconvénient des solutions proposées jusqu'ici provient du fait que le découpage des fentes nécessite un enlèvement de matière pour ménager un écartement entre les bords de ces fentes, entraînant une opération d'usinage relativement lente et de ce fait mal adaptée à la production à bas prix d'un article de grande serie.

On a déjà proposé dans le brevet BE 634 716 de réaliser un conducteur électrique à partir d'une feuille conductrice adhérant par l'une de ses faces à une feuille isolante souple, en ménageant des fentes parallèles longitudinales qui s'étendent alternativement d'un bord transversal, à peu de distance du bord transversal opposé. Ces fentes sont découpées en se servant d'outils rotatifs parallèles qui arrachent du métal ou qui coupent et refoulent le métal à cet endroit. Cette découpe peut encore être electrique ou chimique.

L'inconvénient de ces solutions de découpage réside d'une part dans leur lenteur et donc dans leur coût, d'autre part la solution mécanique proposée nécessite un support suffisamment résistant mécaniquement pratiquement inextensible, et ne se prête pas à un découpage sur un support de mousse élastique notamment. Enfin, un tel mode de découpage ne permet d'obtenir que des sur faces conductrices rectangulaires. Cette solution est d'un coût trop élevé et n'est pas adaptée à nombre d'applications.

Il a déjà été proposé, dans la demande de brevet européen EP 0 004 829, d'associer un corps de chauffe è une mousse d'un matériau thermo-formable afin de pouvoir mouler cette mousse dont on a réalisé au préalable une ébauche destinée à adapter étroitement un elément d'habillement ou un accessoire à une partie du corps humain. Cette adaptation est obtenue par le moulage de cette ébauche, chauffée par le corps de chauffe qui lui est incorporé, aux dimensions exactes de cette partie du corps humain.

Ce corps de chauffe est réalise par la technique des circuits imprimes. Si cette technique s'adapte parfaitement à la nature du support en mousse de matière plastique, dans la mesure où elle permet de fabriquer séparément le corps de chauffe et de le rapporter sur le support de mousse, il s'agit là d'une technologie réservée à la fabrication de circuits électriques. Le coût de fabrication de tels circuits est disproportiomé, lorsque cette technologie n'est utilisée que pour realiser de simples corps de chauffe destinés à des articles fabriqués en grande série, d'autant plus qu'un tel corps de chauffe ne requiert nullement la précision des circuits imprimes.

Par ailleurs, il a déjà été proposé, dans le brevet CH 421 330, de réaliser un corps de chauffe du type de ceux mentionnés ci-dessus, par étamage d'une feuille métallique mince collée sur un revêtement isolant. Il faut cependant remarquer qu'un tel mode de fabrication se heurte à une importante difficulté pratique étant donné que, unei fois la feuille métallique et le revêtement isolant découpés, cette feuille et ce revêetement sont transformes en un mince ruvan en zigzag de sorte que la géométrie de la feuille n'existe plus en l'absence d'un support, ce qui rend la fabrication, la manipulation et l'utilisation du corps de chauffe problématiques.

Le but de la présente invention est de remédier au moins partiellement, aux inconvénients des solutions susmentionnées.

A cet effet, l'invention a pour objet un procédé de fabrication d' chauffe selon la revendication 1.

L'avantage essentiel de l'invention réside dans le fait que, une fois découpés, les brins parallèles du conducteur résistif resport sur lequel la feuille métallique est découpée, après avoir été collée, n'est pas découpé totalement ou tout au moins pas sur toute la longueur de la fente. Ainsi, le corps de chauffe obtenu conserve, une fois découpé, sa cohésion géométrique et peut, de ce fait, être obtenue à l'aide d'une seule et même operation de découpage d'un matériau en feuille formé de la feuille métallique et de son support fixés l'un à l'autre.

Le dessin annexé illustre, schématiquement et à titre d'exemple, une forme d'exécution et des variantes du corps de chauffe objet de la présente invention:

la fig. 1 est une vue en perspective de cette forme d'exécution,

la fig. 2 est une vue en perspective d'un outil de découpage de ce corps de chauffe.

la fig. 3 est une vue en coupe en perspective selon III-III de la figure 1,

la fig. 4 est une vue en perspective illustrant la fabrication d'un corps de chauffe associé à une semelle en un matériau thermoformable,

la fig. 5 est une vue en perspective d'une autre étape de fabrication de cette semelle,

la fig. 6 est une vue, avec arrachement d'une bouteille isolante chauffante,

la fig. 7 est une vue en plan du côte du support, d'une autre variante de l'invention,

la fig. 8 est une vue agrandie en coupe selon VIII-VIII de la fig. 7 au cours de l'opération de découpage,

la fig. 9 est une vue en coupe montrant une utilisation du corps de chauffe pour adapter deux surfaces non complémentaires l'une à l'autre.

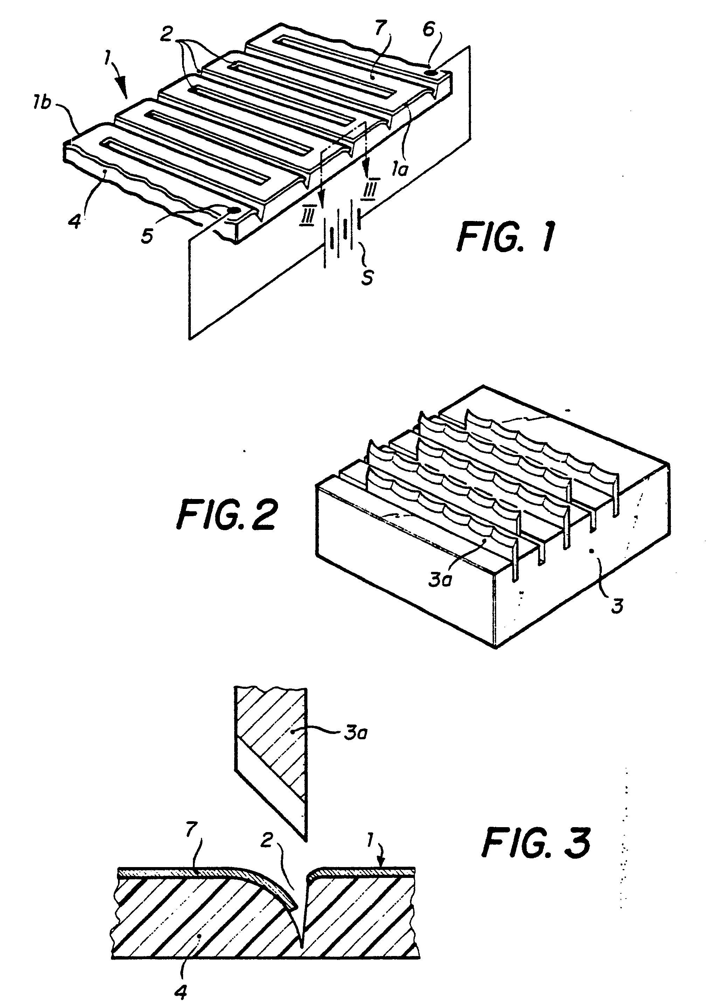

Le corps de chauffe illustre par les fig. 1 et 3 est constitué par une feuille métallique 1, par exemple une feuille d'aluminium de l'ordre de 0,05 mm d'épaisseur, dans laquelle des fentes 2 sont découpées à l'emporte-pièce à l'aide d'un decoupoir 3 muni de lames 3a.

A cet effet, la feuille métallique 1 est disposée sur un support de découpage 4, en un matériau élastiquement compressible tel qu'une feuille de mousse en matière plastique, destinée à permettre aux lames 3a du découpoir 3 de traverser la feuille métallique 1. Ce support 4 est lui-même placé sur un billot d'une presse de découpage è l'emporte-piece (non representée). De préférence, la feuille métallique 1 est fixée au support 4 par collage. Cette solution convient de ce fait particulièrement lorsque le corps de chauffe ainsi réalisé, est destiné à chauffer une mousse d'un matériau thermo-formable, telle une mousse de polyethylène, ccmme decr it par exemple dans le demande EP 0 004 829.

Dans la forme d'execution illustrée par la fig. 1, les fentes 2 sont parallèles et partent alternativement de deux bords opposes 1a, 1b de la feuille métallique 1, mais s'arrêtent è une certaine distance de 1' autre bord, formant ainsi un conducteur electrique continu 7, constituant un corps de chauf fe de section sensiblement constante entre deux bornes 5 et 6 reliées à une source de courant électrique S.

Comme on le voit en particulier sur la fig. 3, les bords opposés des fentes 2 sont ecartes l'un de l'autre, cet ecartement etant obtenu par deformation de la portion du conducteur résistif, adjacente aux bords de cette fente 2, de sorte que ces bords font saillie du plan de la feuille métallique, du côté de cette feuille adjacent au support 4. Cette deformation est obtenue au cours de l'opération de découpage et est fonction de la pression nécessaire pour faire penetrer l'outil dans la feuille métallique 1 ainsi que de la résistance à la compression du support de découpage 4. La pression de penetration du découpoir 3 est fonction de l'épaisseur et de la nature de la matière constituant la feuille métallique 1 ainsi que de la forme de l'arête de coupe du decoupoir, comme on l'expliquera plus en detail par la suite. La deformation des bords de la fente peut ainsi être suffisant importante pour separer et isoler ainsi electriquement les unes des autres les portions adjacentes du conducteur résistif 7, sans necessiter aucun enlevement de matière. Les deux bords de la fente 2 ainsi écartes, les parties du conducteur electrique résistif adjacentes à cette fente, sont isolées 1, une de l'autre, obligeant le courant à parcourir le conducteur résistif 7 sur toute sa longueur et à chauf fer ainsi, par effet Joule, toute la surface de la feuille métallique.

Pour faciliter le découpage de la feuille métallique 1 et concentrer la pression initiale des lames 3a du decoupoir 3 sur des surfaces très petites, augmentant ainsi la capacite de penetration de ces lames 3a, 1'arête de coupe de ces lames peut être festonnée. Par ailleurs, notamment lorsque le support 4 est destiné à rester fixé a la feuille métallique 1 une fois celle-ci decoupée, la formation de festons le long de l'arête de coupe de la lame 3a permet de laisser subsister des ponts de matière dans le support 4 entre les pointes des festons de sorte que les bords des fentes déecoupées dans ce support 4 ne se separent pas. Ainsi, le support conserve sa geoéométrie et par conséquent celle du conducteur découpé dans la feuille métallique 1. Ceci permet la manipulation et l'utilisation ulterieures du corps de chauffe dont les brins parallèles restent liés latéralement les uns aux autres par l'intermédiaire du support, cocmme illustre par la fig. 3, la face arrière du support 4 ne présentant aucune découpe ou éventuellement seulement à l'endroit des pointes de la lame 3a. Des essais réalisées avec des lames droites ne traversant le support que sur la moitié de son épaisseur environ, sur toute la longueur de la fente, ont également permis d'obtenir de bons resultats.

L'écartement réalisé entre les bords des fentes 2 peut être augmenté en faisant usage d'une lame 3a de découpoir 3 dont 1' une des faces, adjacente à 1' arête de coupe, forme un bi seau avec le plan de la lame, comme illustré par la fig. 2 de manière è déformer davantage le bord de la fente du côté du biseau de cette lame.

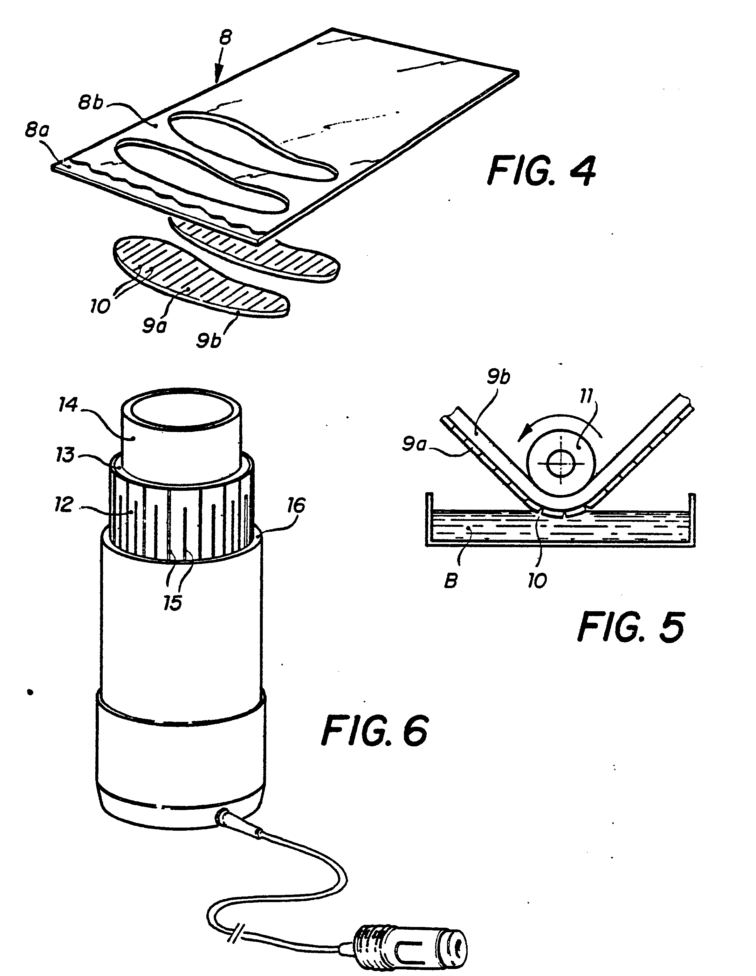

Parmi les avantages propres à ce corps de chauffe et è son procédé de fabrication, on peut noter le fait que le pourtour du corps peut être découpé, au cours de la même operation de découpage à l'emporte-pièce que les fentes, dans un matériau composite en feuille 8 (fig. 4), formé d'une feuille 8a de mousse de matière plastique élastiquement compressible sur laquelle est collée une feuille d'aluminium 8b. Dans cet exemple, on déccupe des corps de chauffe 9a en forme de semelles, en vue de rapporter chaque corps 9a, avec sa couche de mousse sous-jacente 9b, sur une ébauche de semelle en mousse de matière plastique thermo-formable (non représentée), telle qu' une mousse de polyéthylène 'basse densité' souf flée à l'azote, pour réaliser une semelle thermo-formable à chauf fage incorporé destinée à être placée à 1' intérieur d'une chaussure en vue d'ajuster très exactement cette chaussure au pied de 1' usager, par moulage de la semelle. Les essais réalisés ont montré que la température de thermo-formage des mousses de polyéthylène 'basse densité', de l'ordre de 140°C, est tout à fait supportable et ne provoque aucune brûlure de l'épiderme.

La fig. 4 illustre encore la répartition des fentes 10 qui peut être adoptée dans le cas d'un tel corps de chauf fe. Suivant l'application considérée, il est possible que 1' écartement entre les bords des fentes 10 se révèle encore insuffisant, notamment lorsque le corps de chauffe est scumis à une forte compression au cours de son utilisation, comme ceci peut être le cas avec une semelle chauffante. Il est alors envisagé d' écarter les fentes 10 après leur découpage, par exemple en incurvant la feuille de mousse découpée 9b et le corps de chauffe 9a, apparaissant sur la face convexe de cette feuille de mousse 9b, en la faisant passer sur un cylindre 11 (fig. 5), et d'introduire, dans ces fentes écartées, une substance isolante sous forme liquide, pàteuse ou même solide, par exemple. C'est ainsi que l,on peut par exemple enduire les bords de la fente 10 d'un vernis isclant ou d'un produit similaire, empêchant les bords de la fente 10 de se toucher en faisant passer le corps de chauffe 9a dans

3

un bain B contenant la substance isolante liquide. En variante, on pourrait aussi introduire dans cette fente une garniture isolante solide.

Comme il a déjà été spécifié, le corps de chauffe est de préférence collé sur un support de matière isolante de 1' électricité de manière que, une fois découpé, les portions adjacentes du conducteur résistif ainsi formé restent liées par 1' intermédiaire de la matière de support, pour que le corpa de chauffe puisse être manipulé aisément.

A cet effet, la feuille métallique peut être collée sur une couche de mousse de matière plastique par une colle à base de caoutchouc qui se dégrade à une température de l'ordre de 90°C. Une fois le corps de chauffe découpe, il est alors collé par sa face libre sur une autre surface réceptrice sur laquelle il est destiné à être fixé à demeure, à l'aide d'une colle thermo-durcissable, par exemple une résine époxy. Une fois que la face libre du corps de chauf fe a été appliquée contre cette surface réceptrice encollée, on branche le corps de chauffe à une source de courant, pour élever sa température jusqu'aux environs de IOO°C, de sorte que la colle à base de caoutchouc se dégrade. On peut alors enlever la mousse qui a servi de support au cours du découpage et le corps de chauffe reste fixé à cette surface par la résine époxy durcie,

La fig. 6 illustre 1' application de 1' invention à la fabrica- tion d'une bouteille chauffante dans làquelle le corps de chauffe 12 est découpe sur une couche de mousse 13 relativement mince et dense, bonne conductrice de la chaleur, telle une mousse de néoprène sur laquelle elle est collée. Une fois le corps de chauffe 12 découpe', la face libre de la couche de mousse 13 est alors collée autour d'une bouteille 14. Comme les fentes 15 du corps de chauffe sont orientées selon les génératrices de la bouteille, les bords de ces fentes sont écartés. Ensuite, une couche d'une mousse isolante 16 d'habillage recouvre le corps de chauffe 12. Il est également possible d'envisager le découpage des fentes à l'aide d'un découpoir présentant deux biseaux symétriques de part et d'autre de 1' arête de coupe, prcduisant ainsi une déformation égale des por tions du conducteur résisti f adjacentes aux bords opposés de cette fente.

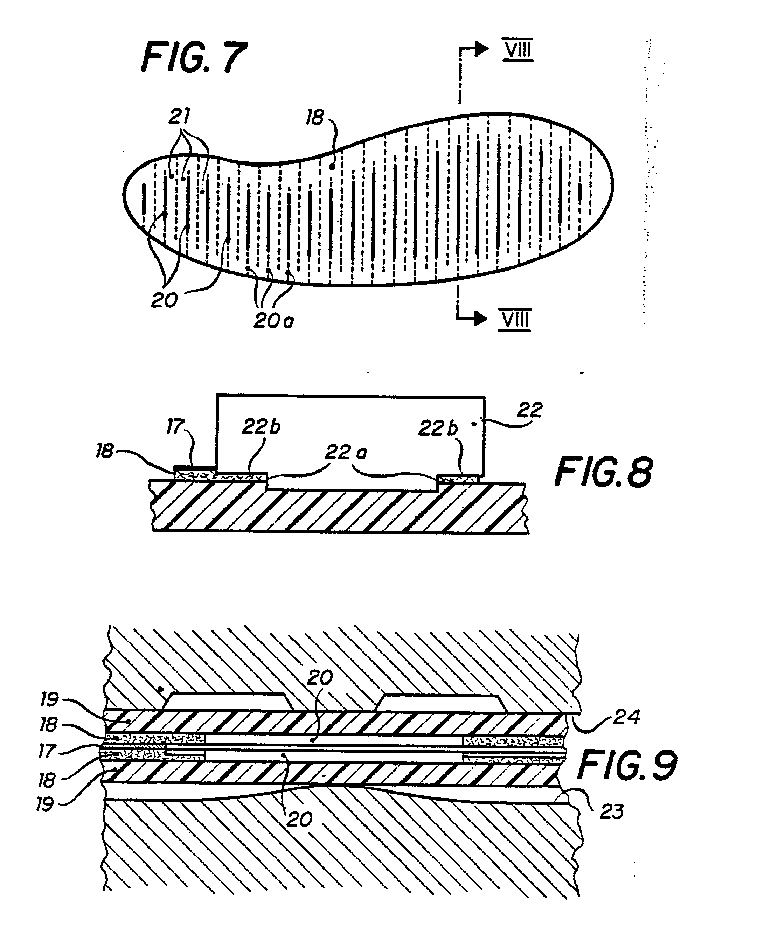

Dans le cas de l'utilisation du corps de chauffe selon l'invention pour réaliser le thermo-formage d'une couche de mousse en vue d'adapter deux surfaces non complémentaires l'une à l'autre comme illustré par la fig. 9, lorsque le support du corps de chauffe est constitué par la mousse de matière thermo-plastique elle-même, au moment du thermo-formage, quand la mousse est à sa température de fluage, le corps de chauf fe n' est plus renforcé mécaniquement et est alors appelé à supporter toutes les contraintes. Comme ce corps de chauffe est généralement réalisé dans une feuille d'aluminium de l'ordre de 0,05 mm d' épaisseur, il n'est pas rare que ces contraintes dépassent les limites de résistance à la traction, de sorte que le corps de chauf fe n'est plus réutilisable. C'est la raison pour laquelle, selon une variante de la présente invention (figs. 7, 8 et 9) on fixé une feuille métallique 17 sur un support 18 en un matériau non thermo-formable, tel du papier, un carton ou un feutre synthétique par exemple. Pour que le support donne une bonne résistance mécanique lors de l'operation de thermo-formage de la ou des couches de mousse 19 rapportées d'un côté ou des deux côtés de la feuille métallique 17 et de son support 18, le matériau du support, en carton ou en feutre notamment, sera avantageusement d'une rigidité telle que, dans certains cas, elle s'oppose à l'écrasement local de la mousse entre les deux surfaces non complémentaires et tende à répartir la pression sur une plus grande superficie que celle de l'irrégularité de surface sollicitant l'écrasement local de la mousse. Ceci se produira chaque fois que 1' une des surfaces à adapter présentera par exemple une suite rapprochée de parties convexes et concaves que la rigidité du support ne permettra pas d'épouser.

Pour remédier à cet inconvenient, le matériau de support 18 peut être traversé par des fentes 20 ménagées le long des fentes 20a de la feuille métallique 17, mais s'arrêtant à une certaine distance des deux bords opposés du support. Ainsi, les fentes parallèles traversant ce support forment des languettes 21 rattachées à leurs deux extrémités aux bords opposés de ce support. Tout en conservant la géométrie du support, ces languettes 21 permettent une grande souplesse d'adaptation du fait que deux languettes adjacentes peuvent se déplacer dans deux directions opposées et même s'écarter légerement l'une de l'autre dans leur partie médiane. En outre, ces fen tes augmentent considérablement la souplesse du support 18. Dans le cas d'une semelle thermo-formable par exemple, les languettes 21 ménagées transversalement, augmentent la souplesse de la semelle dans le sens longitudinal améliorant le confort. Grâce à ces languettes, il est donc possible de concilier le renforcement mécanique des brins de conducteurs issus du découpage de la feuille métallique 17 avec la souplesse du support, ce qui est très important lorsqu'il s'agit d'adapter deux sur faces non complémentaires par le thermo-formage d'une couche de mousse préalablement comprimée afin de permettre un écrasement local de cette couche en fonction des ir régularités entre les deux surfaces à adapter.

Il est à remarquer que la largeur des languettes 21 n'est pas obligatoirement égale à celle des brins parallèles du conducteur résistif découpé dans la feuille métallique 17, mais peut correspondre à un multiple quelconque de cette largeur. Dans le cas d'une feuille métallique 17 asscciée par une face seulement à un support 18, le découpage du conducteur résistif et des fentes 20 traversant le support peut être obtenu en une seule operation à 1' aide d'un couteau 22 à lame non festonnée, qui présente deux décrochements 22a, et en reglant sa pénétration de telle sorte que la partie de la lame 22b faisant suite à ce décrcchement ne traverse que partiellement 1' épaisseur du support 18, de sorte que seule la feuille métallique 17 soit découpée vis-à-vis de cette portion 22b du couteau.

Si, au contraire, un support 18 s' étend des deux côtés de la feuille métallique, comme illustré par la fig. 9, un de ces deux supports doit être découpe séparément et ensuite rapporté sur le côté libre de la feuille métallique 17 asscciée à l'autre support. Comme, de préférence, le contour externe du corps de chauffe et les fentes parallèles formant le conducteur sont découpées simultanément à 1' emporte-piece, selon le mode de fabrication illustré et décrit en regard de la fig. 4, et que tant le support 18 assccié à la feuille métallique 17 que 1' autre support seul sont découpes avec le meme outil, il suffit de faire coïncider les bords respectifs des deux supports pour que leurs fentes coïncident également. Cette fig. 9 illustre également le cas où le corps de chauffe formé de la feuille métallique 17, prise entre deux couches support 18, reçoit deux epaisseurs 19 de mousse d'un matériau thermo-formable destinées à l'adaptation de deux surfaces 23, 24, non complémentaires l'une à l'autre, par mise sous pression entre ces surfaces et thermo-formage des épaisseurs de mousse 23 à l'aide du corps de chauffe 17.

## Revendications

1. Procede de fabrication d'un corps de chauffe électrique selon lequel on fixe une feuillemétallique (1) sur un support isolant et flexible (4), on decoupe fentes paralleles (2) partant alternativement de deux bords opposses (1a, 1b) de cette feuille et s'arrêtant à distance do bord opposé à celui d'où elle partent pour former un conducteur résistif (7) sur toute al surface de cette feuille et on écarte pendant le découpage au moins un des bords de ces fentes en le déformant par rapport au plan de la feuille, caractérisé par le fait que l'on découpe lesdites fentes (2) à l'emporte pièce une fois la feuille métallique fixée audit support isolant flexible (4) que l'on ne traverse au plus ledit/support au droit desdites fentes que sur une partie de la. longueur de ces fentes pour laisser subsister des ponts de matière dans ledit support (4) reliant la teralement les brins parallèles dudit conducteur (7) les uns aux autres après le deécoupage des dites fentes.

2. Procédé selon la revendication 1, caractérisé par le fait que l'on decoupe lesdites fentes (2) en traversant ledit support (4) au droit d'au moins une partie des fentes traversant ladit feuille (1), tout en s'arrêtant à distance des bords opposes de ce support (4), pour former des lamelles adjacentes rattachées par leurs extrémités aux parties marginales de ce support (4).

3. Procédé selon la revendication 1, caractérisé par le fait que tant le découpaqe du bord périphéerique de ce corps de chauffe et de son support (4), que celui des fentes (2) destinées à délimiter ledit conducteur (7) sont obtenus par une seule et même opération de découpaqe à l'emporte pièce.

4. Procédé selon la revendication 3, caractérisé par le fait que l'on introduit dans lesdites fentes (2) un matériau isolant de l'électricité à l'état pâteux ou liquide et qu'on le laisse durcir.

## Patentansprüche

1. Verfahren zur Herstellung eines elektrischen Heizelementes, bei dem man eine Metallfolie (1) auf einem isolierenden und flexiblen Träger (4) befestigt, parallele Schlitze (2) einschneidet, die abwechselnd von den beiden, einander gegenüberliegenden Rändern (1a, 1b) dieser Folie ausgehen und in einem Abstand zum Rand enden, der jenem gegenüberliegt, von wo sie ausgehen, um einen Widerstandsleiter (7) auf der gesamten Oberfläche dieser Folie zu bilden, und man während des Einschneidens wenigstens einen Rand dieser Schlitze versetzt, indem man ihn gegenüber der Ebene der Folie deformiert, dadurch gekennzeichnet, daß man die Schlitze (2) mit einer Stanze einschneidet, wenn die Metallfolie auf dem isolierenden und flexiblen Träger (4) befestigt ist, und daß man den Träger rechtwinklig zu den Schlitzen nur auf einem Teil der Länge dieser Schlitze durchsetzt, um Materialbrücken im Träger (4) bestehen zu lassen, die seitlich die parallelen Zweige des Leiters (7) miteinander verbinden, nachdem die Schlitze eingeschnitten worden sind.

2. Verfahren nach Anspruch 1, dadurch gekennzeichnet, daß man die Schlitze (2) einschneidet, indem man den Träger (4) rechtwinklig über wenigstens einen Teil der Schlitze durchsetzt, die die Folie (1) durchsetzen, wobei man sich im Abstand von den gegenüberliegenden Rändern dieses Trägers (4) hält, um benachbarte Lamellen zu bilden, die über ihre Enden an Randabschnitten dieses Trägers (4) verbunden sind.

3. Verfahren nach Anspruch 1, dadurch gekennzeichnet, daß sowohl das Schneiden des Randes dieses Heizelementes und seines Trägers (4) als auch der Schlitze (2), die den Leiter (7) begrenzen, in demselben und einzigen Schnittvorgang durch eine Stanze erhalten werden.

4. Verfahren nach Anspruch 3, dadurch gekennzeichnet, daß man in die Schlitze (2) ein elektrisches Isoliermaterial in pastösem oder flüssigem Zustand einbringt, und daß man es härten läßt.

## Claims

1. Process for manufacturing an electric heating body, accord- ing to which a metallic foil (1) is applied to an insulative flexible substrate (4) and parallel slots (2) are cut starting alternatively form two opposite side (1a, 1b) of this foil and stopping at some distance from the side opposite to the starting side so as to form a resistive conductor (7) on the whole surface of this foil, and at least one edge of these slots is drawn aside during the cutting by bending it relatively to the plane of the foil, characterized in that said slots (2) are cut with a punch once the metallic foil is attached to said insulative flexible substrate (4) and that this punching in a direction perpendicular to these slots involves at most a portion of the length of these slots to let remain bridges of matter in said substrate (4) for connecting sidewise to each other the parallel segments of said conductor (7) after said slots have been cut.

2. Process according to claim 1, characterized in that said slots (2) are cut by punching through said substrate (4) in a direction perpendicular to at least a portion of the slots cut in said foil (1), but stopping at a distance from the opposite edges of said substrate (4) to form adjacent strips bounded at the end thereof to the marginal parts of this substrate.

3. Process according to claim 1, characterized in that the cutting of the peripheric edge of this heating body and its substrate (4) as well as the cutting of the slots for shaping said conductor (7) are obtained by a single and unique cutting operation with a punch.

4. Process according to claim 3, characterized in that the slots are filled with an electric insulator material in the liquid or putty state and allowed to harden.

FIG. 1

FIG. 2

FIG. 3

FIG. 4

FIG. 5

FIG. 6

# FIG. 7

21  18

VIII

20  20a

VIII

# FIG. 8

17  22b  22b  22

18  22a

# FIG. 9

19  20  24

18

17

18

19  20  23